# EUROPÄISCHE PATENTSCHRIFT

(11) **EP 3 263 378 B1**
(45) Veröffentlichungstag und Bekanntmachung des Hinweises auf die Patenterteilung: **10.07.2019**
(21) Anmeldenummer: 17170181.6
(22) Anmeldetag: 09.05.2017
(51) Int. Cl.: B60K 1/02, B60K 17/08, B60K 17/34, B60K 17/354, B60K 17/356, B62D 21/02, B60K 6/52

(54) **BATTERIE-ELEKTRISCH BETRIEBENES NUTZFAHRZEUG, INSBESONDERE LASTKRAFTWAGEN**
BATTERY DRIVEN ELECTRIC COMMERCIAL VEHICLE, ESPECIALLY LORRY
VÉHICULE UTILITAIRE À BATTERIE ÉLECTRIQUE, EN PARTICULIER POIDS LOURD

(30) Priorität: 19.05.2016 DE 102016006208
(43) Veröffentlichungstag der Anmeldung: 03.01.2018
(73) Patentinhaber: MAN Truck & Bus AG, 80995 München (DE)
(72) Erfinder: Fissmann, Tobias, 81543 München (DE); Mayer, Florian, 83026 Rosenheim/Eising (DE); Braun, Reimar, 81735 München (DE); Müller, Anton, 82327 Tutzing (DE); Müller, Bernd, 80689 München (DE); von Esebeck, Götz, 15831 Blankenfelde-Mahlow (DE)
(74) Vertreter: v. Bezold & Partner Patentanwälte - PartG mbB

(56) Entgegenhaltungen:
- EP-A1- 0 544 597
- EP-A1- 1 518 735
- EP-A2- 2 436 950
- CA-A1- 2 940 603
- GB-A- 464 500

## Beschreibung

Die Erfindung betrifft ein Batterie-elektrisch betriebenes Nutzfahrzeug, insbesondere einen derartigen Lastkraftwagen. Aus dem Stand der Technik sind Batterie-elektrisch betriebene Fahrzeuge, insbesondere aus dem PKW-Bereich, bekannt. Die dort bekannten Konzepte sind jedoch nicht ohne Weiteres auf den Nutzfahrzeugbereich übertragbar. So sind beispielsweise aus dem PKW-Bereich vergleichsweise teure Elektroantriebe in Kombination mit einem mehrgängigen Schaltgetriebe bekannt, die sich nur bedingt für den Einsatz für einen Batterie-elektrisch betriebenen Lastkraftwagen eignen. Ferner weisen PKWs und Nutzfahrzeuge unterschiedliche Ansätze zur Ausbildung des Fahrgestells auf, so dass aus dem PKW-Bereich bekannte Ansätze zur Unterbringung des Elektroantriebs im Fahrgestell nicht auf den Nutzfahrzeugbereich übertragbar sind.

Ein Beispiel für ein elektrisch betriebenes Nutzfahrzeug findet sich in der gattungsgemässen Offenlegungsschrift GB 464 500 A. Diese offenbart einen Bus, umfassend einen Leiterrahmen aus zwei Längsträgern, die über mehrere Querträger miteinander verbundenen sind. Ferner wird eine der Fahrzeugachsen des Busses über ein Getriebe von zwei elektrischen Maschinen angetrieben, wobei die beiden elektrischen Maschinen jeweils an Querträgern des Leiterrahmens befestigt sind. Dieses elektrisch betriebene Nutzfahrzeug weist allerdings das Potential auf, die Anordnung des elektrischen Antriebs zu verbessern.

Es ist daher eine Aufgabe der Erfindung, ein Batterie-elektrisch betriebenes Nutzfahrzeug, insbesondere einen Lastkraftwagen, bereitzustellen. Es ist insbesondere eine Aufgabe der Erfindung, ein derartiges Nutzfahrzeug bereitzustellen, das eine Bauraum-sparende und kostengünstige Anordnung des elektrischen Antriebs ermöglicht.

Diese Aufgaben werden durch ein Batterie-elektrisch betriebenes Nutzfahrzeug mit den Merkmalen des unabhängigen Anspruchs 1 gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert. Erfindungsgemäß wird ein Batterie-elektrisch betriebenes Nutzfahrzeug bereitgestellt. Ein Batterie-elektrisch betriebenes Nutzfahrzeug ist ein Nutzfahrzeug, das rein elektrisch betrieben wird und somit keinen verbrennungsmotorischen Antrieb aufweist. Das Batterie-elektrisch betriebene Nutzfahrzeug kann jedoch einen sogenannten Range-Extender (engl.; deutsch Reichweitenverlängerer) aufweisen. Das Batterie-elektrisch betriebene Nutzfahrzeug kann insbesondere ein Batterie-elektrisch betriebener Lastkraftwagen sein.

Das erfindungsgemäße Nutzfahrzeug umfasst in an sich bekannter Weise einen Leiterrahmen, aufweisend zwei Längsträger, die durch Querträger miteinander verbunden sind. Das Nutzfahrzeug umfasst ferner ein Getriebe und mindestens eine am Getriebe angeordnete generatorisch und motorisch betreibbare elektrische Maschine, die über das Getriebe antriebsmäßig mit mindestens einer Achse des Nutzfahrzeugs verbindbar und/oder verbunden ist. Hierbei ist das Getriebe an einem Querträger des Leiterrahmens befestigt. Dies ist aus Bauraum-technischer Sicht vorteilhaft, da in der Regel das verfügbare Raumangebot an den Längsträgern im Vergleich sehr knapp ist und in der Regel wenig freie verfügbare Anschraubpunkte zu Anbringung zusätzlicher Bauteile (hier Anpassgetriebe und elektrische Maschine) vorhanden sind.

Das Getriebe erfüllt somit eine Doppelfunktion: Es ermöglicht einerseits im elektromotorischen Betrieb der elektrischen Maschine einen Kraftfluss von der elektrischen Maschine auf die Achse und im generatorischen Betrieb der elektrischen Maschine einen umgekehrten Kraftfluss, so dass die Antriebsleistung zum Antrieb der elektrischen Maschine verwendet werden kann. Andererseits wird die elektrische Maschine über das Getriebe am Querträger gehaltert.

Das Getriebe ist hierbei vorzugsweise ein Untersetzungsgetriebe zur Untersetzung der Drehzahl der mindestens einen elektrischen Maschine. Das Getriebe kann dabei eine feste, eine variable oder mehrere feste Übersetzungen bereitstellen. Das Getriebe kann als Festgetriebe oder als Mehrganggetriebe ausgeführt sein.

Gemäß einer besonders bevorzugten Ausführungsform ist das Getriebe als Zweiganggetriebe ausgeführt. Dies ermöglicht eine im Vergleich zu den aus dem PKW-Bereich bekannten Mehrganggetrieben mit mehr als zwei Gängen eine kostengünstige Umsetzung, die die für den Nutzfahrzeugbereich erforderlichen Übersetzungsanforderungen abdecken kann.

Das Getriebe kann hierbei an einem herkömmlichen Querträger des Leiterrahmens befestigt sein.

Alternativ kann das Getriebe selbst auch einen derartigen Querträger bilden, beispielsweise indem das Getriebegehäuse selbst als Querträger dient oder indem an dem Getriebegehäuse ein Querträgerelement befestigt oder integriert ist. Auf diese Weise kann das Getriebe selbst eine Querversteifungsfunktion ausbilden.

Gemäß einer weiteren bevorzugten Ausführungsform kann das Getriebe gedämpft gelagert sein, beispielsweise indem das Getriebe gedämpft am Querträger gelagert ist oder der Querträger, an dem das Getriebe befestigt ist, gedämpft an den Längsträgern des Leiterrahmens gelagert ist. Hierdurch können das Getriebe und die mindestens eine daran angebundene elektrische Maschine vor mechanischen Belastungen im Fahrbetrieb besser geschützt werden. Eine gedämpfte Lagerung kann beispielsweise durch das Vorsehen von Gummielementen an den Lagerstellen des Getriebes realisiert werden.

Die mindestens eine elektrische Maschine ist am Getriebe angeordnet und befestigt und kann über das Getriebe am Querträger befestigt sein. Ferner kann die elektrische Maschine auch selbst einen Befestigungspunkt oder Auflagepunkt am Leiterrahmen aufweisen, wodurch eine zusätzliche Lagerstabilität erreicht werden kann.

Vorstehend wurde bereits erwähnt, dass mindestens eine elektrische Maschine am Getriebe angeordnet sein kann. Gemäß einer bevorzugten Ausführungsform kann das Getriebe zwei Getriebeschnittstellen zur Anbindung einer motorischen, generatorisch betreibbaren elektrischen Maschine aufweisen, so dass wahlweise eine oder zwei elektrische Maschinen über das Anpassgetriebe antriebsmäßig mit der Achse verbindbar sind. Bei einer vorteilhaften Variante dieser Ausgestaltungsform ist eine Getriebeübersetzung des Anpassgetriebes für die beiden Getriebeschnittstellen unterschiedlich. So kann, falls zwei elektrische Maschinen an dem Anpassgetriebe angeschlossen sind, wahlweise diejenige der beiden elektrischen Maschinen zur Antriebsunterstützung und/oder Rekuperation verwendet werden, deren zugeordnete Übersetzung zweckmäßig am besten zur jeweiligen Betriebssituation passt.

So können je nach Betriebspunkt des Fahrzeugs wahlweise die eine oder die andere elektrische Maschine zum Antrieb und damit wahlweise die eine oder die andere Übersetzung verwendet werden. Es kann somit ein Batterie-elektrisch betriebenes Nutzfahrzeug bereitgestellt werden, bei dem zwei motorisch und generatorisch betreibbare elektrische Maschinen an dem Getriebe angeordnet sind und mit jeweils unterschiedlicher Übersetzung mit der mindestens einen Achse in Antriebsverbindung stehen. Im elektromotorischen Betrieb der elektrischen Maschine leitet das Getriebe somit den Kraftfluss von der elektrischen Maschine auf die Achse. Im generatorischen Betrieb dreht sich der Kraftfluss um, so dass die Antriebsleistung zum Antrieb der elektrischen Maschine verwendet werden kann.

Das Getriebe kann einen ersten Wellenflansch aufweisen, an dem eine erste Gelenkwelle angebunden ist, die das Getriebe antriebsmäßig mit einer Hinterachse verbindet. Das Getriebe kann ferner einen zweiten Wellenflansch aufweisen, an dem eine zweite Gelenkwelle angebunden ist, die das Getriebe antriebsmäßig mit einer Vorderachse oder einem Nebenaggregat verbindet. Auf diese Weise kann die E-Maschine je nach Ausführungsform nicht nur zur zum Antrieb der Hinterachse des Nutzfahrzeugs, sondern auch zum Antrieb einer zweiten Achse, z. B. der Vorderachse, oder zum Antrieb eines Nebenaggregats verwendet werden. Das Getriebe kann als Stirnradgetriebe ausgeführt sein. Ferner ist es möglich, dass das Getriebe ein Planetengetriebe, ein Umschlingungsgetriebe oder eine Kombination der vorgenannten Getriebevarianten ist.

So kann die elektrische Maschine beispielsweise eine Dauerleistung von mindestens 100 kW, 120 kW, 150 kW oder sogar mindestens 200 kW aufweisen. Die Spitzenleistung der elektrischen Maschine beträgt dagegen vorzugsweise mindestens 250 kW, 300 kW oder sogar 320 kW. Weiterhin ist zu erwähnen, dass die elektrische Maschine vorzugsweise eine Nenndrehzahl von mindestens 5.000 min⁻¹, 7.500 min⁻¹, 10.000 min⁻¹, 12.500 min⁻¹ oder sogar mindestens 15.000 min⁻¹ aufweist.

Weiterhin ist zu erwähnen, dass die elektrische Maschine vorzugsweise mit einer Spannungsklasse, insbesondere einer Zwischenkreisspannungsklasse, von 800 V betrieben wird. Ebenfalls möglich, aber weniger bevorzugt wäre eine Spannungsklasse von 400V. So weisen Bordnetze oftmals eine Zwischenkreisspannungsklasse von 800 V oder 400 V auf, die zum Antrieb der elektrischen Maschine verwendet werden kann. Hierbei ist jedoch zu bemerken, dass der Schutz dieser Erfindungsvariante nicht beschränkt ist auf diese genannten Spannungsklassen.

Gemäß einer besonders bevorzugten Ausführungsform ist das Getriebe an einem ersten Querträger des Leiterrahmens befestigt, und die mindestens eine elektrische Maschine ist über das Getriebe antriebsmäßig mit der Hinterachse verbindbar und/oder verbunden. Der erste Querträger ist vorzugsweise in einem Bereich der Hinterachse angeordnet. Ferner kann zur Ausbildung eines elektrischen Allradantriebs eine weitere generatorisch und motorisch betreibbare elektrische Maschine an einem zweiten Getriebe angeordnet sein und über das zweite Getriebe antriebsmäßig mit einer Vorderachse verbindbar sein, wobei das zweite Getriebe an einem zweiten Querträger befestigt ist. Der zweite Querträger ist vorzugsweise in einem Bereich der Vorderachse angeordnet. Auf diese Weise kann ein elektrischer Allradantrieb bereitgestellt werden, ohne eine entsprechende Kardanverbindung zwischen den beiden angetriebenen Achsen, was im Vergleich zu einer konventionellen Bauform zusätzlichen freiwerdenden Bauraum ermöglicht.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1: eine schematische Draufsicht auf einen elektrischen Antrieb eines Nutzfahrzeugs gemäß einer ersten Ausführungsvariante der Erfindung;
- Figur 2: eine schematische Draufsicht auf einen elektrischen Antrieb eines Nutzfahrzeugs gemäß einer zweiten Ausführungsform der Erfindung;
- Figur 3: eine schematische Draufsicht auf einen elektrischen Antrieb eines Nutzfahrzeugs gemäß einer dritten Ausführungsform der Erfindung;
- Figur 4: eine schematische Draufsicht auf einen elektrischen Antrieb eines Nutzfahrzeugs gemäß einer vierten Ausführungsform der Erfindung; und
- Figuren 5A-5C: schematische Ansichten zur Illustration der Anbindung des Getriebes an den Leiterrahmen.

Gleiche oder funktional äquivalente Elemente sind in allen Figuren mit den gleichen Bezugszeichen beschrieben und zum Teil nicht gesondert beschrieben.

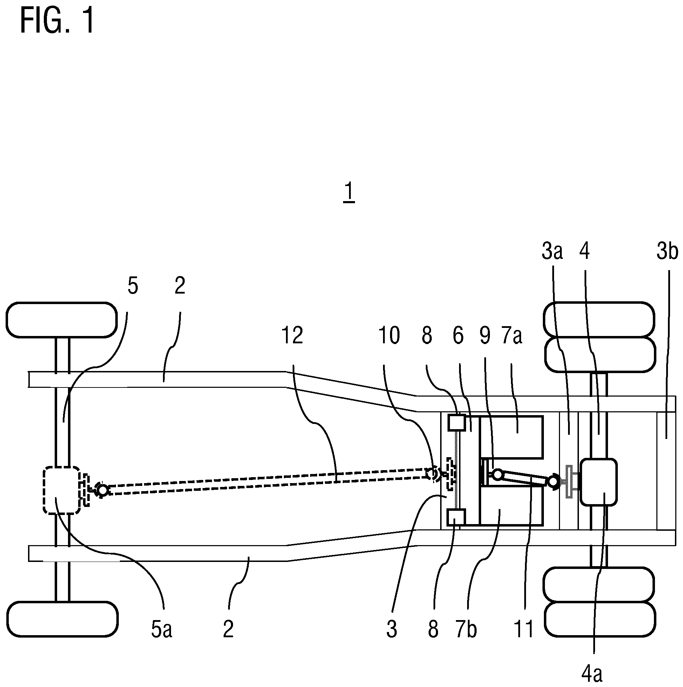

Figur 1 zeigt eine stark schematisierte Draufsicht auf einen Leiterrahmen und elektrischen Antrieb eines Batterie-elektrisch betriebenen Nutzfahrzeugs 1. Von dem Nutzfahrzeug 1 sind zur Hervorhebung der Erfindung im Wesentlichen nur die Achsen, der Leiterrahmen und der elektrische Antrieb schematisch dargestellt. Der Leiterrahmen umfasst in an sich bekannter Weise zwei Längsträger 2, die durch Querträger 3, 3a, 3b miteinander verbunden sind.

Im hinteren Bereich des Leiterrahmens ist ein Getriebe 6 an dem Querträger 3 befestigt. Hier können zur Befestigung zweckmäßig ausgeführte Befestigungselemente 8, z. B. eine Verschraubung, verwendet werden. Beispielsweise kann eine am Querträger angeordnete Lochplatte verwendet werden, an der das Getriebe 6 verschraubt wird.

Das Getriebe 6 ist ein Untersetzungsgetriebe zur Untersetzung der Drehzahl einer am Getriebe angeordneten elektrischen Maschine und ist vorliegend als Zweiganggetriebe ausgeführt. In der vorliegenden Ausführungsvariante weist das Getriebe 6 zwei Getriebeschnittstellen zur Anbindung jeweils einer motorisch und generatorisch betreibbaren elektrischen Maschine auf, so dass wahlweise eine oder zwei elektrische Maschinen über das Getriebe 6 antriebsmäßig mit einer oder mehreren Achsen des Fahrzeugs verbindbar sind.

Wie in Figur 1 erkennbar ist, sind vorliegend zwei elektrische Maschinen 7a und 7b an dem Getriebe 6 angeordnet. Das Getriebe 6 kann als Stirnradgetriebe ausgeführt sein. Das Getriebe 6 ist zwischen den beiden Längsträgern 2 an einem Querträger 3 befestigt, der sich zwischen der Vorderachse 5 und der Hinterachse 4 des Nutzfahrzeugs befindet. Auf der der Hinterachse 4 zugewandten Seite des Getriebes 6 befindet sich ein Wellenflansch 9, an dem eine Gelenkwelle 11, z. B. eine Kardanwelle, angeschlossen ist, die an ihrem anderen Ende an einem entsprechenden Wellenflansch des Achsdifferentials 4a der Hinterachse 4 angeschlossen ist, so dass im elektromotorischen Betrieb einer oder beider elektrischen Maschinen 7a, 7b ein Kraftfluss über das Getriebe 6 die Gelenkwelle 11 hin zur hinteren Achse 4 erzeugbar ist. Umgekehrt kann im generatorischen Betrieb der elektrischen Maschine(n) 7a, 7b ein Kraftfluss von der Hinterachse 4 über die Gelenkwelle 11 und das Getriebe 6 hin zu einer oder beiden elektrischen Maschine 7a, 7b geleitet werden.

Optional kann das Getriebe 6 auf seiner der Vorderachse zugewandten Seite einen weiteren Wellenflansch 10 aufweisen. Bei dieser optionalen, durch die gestrichelten Linien gekennzeichneten Variante der in Figur 1 gezeigten Ausführungsform verbindet eine weitere Gelenkwelle 12, z. B. eine Kardanwelle, den Wellenflansch 10 mit dem Achsdifferential 5a der Vorderachse 5. Auf diese Weise kann ein elektrischer Allradantrieb bereitgestellt werden.

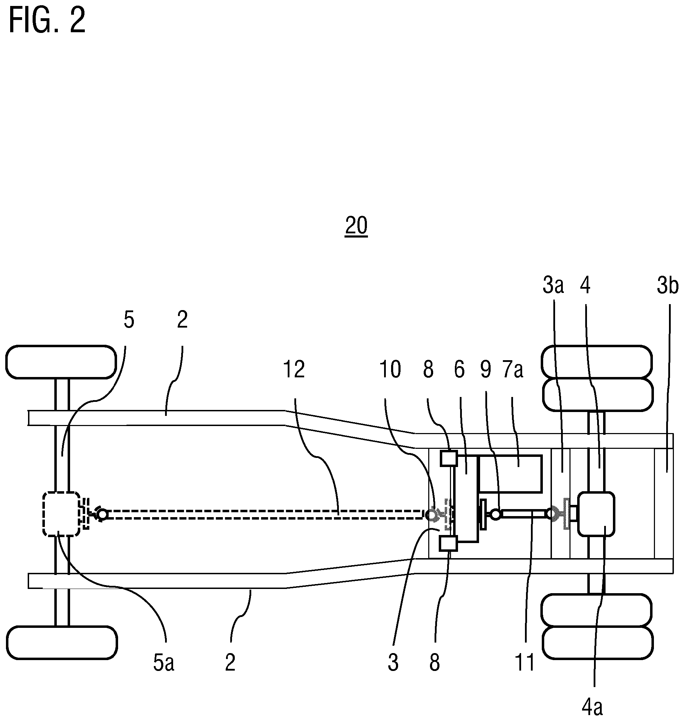

Figur 2 zeigt eine weitere Ausführungsform eines Batterie-elektrisch betriebenen Nutzfahrzeugs 20. Hierbei entsprechen Komponenten mit gleichen Bezugszeichen den Komponenten der Figur 1 und werden nicht gesondert beschrieben. Die Besonderheit dieser Ausführungsvariante liegt darin, dass am Getriebe 6 nur eine elektrische Maschine 7a angeschlossen ist.

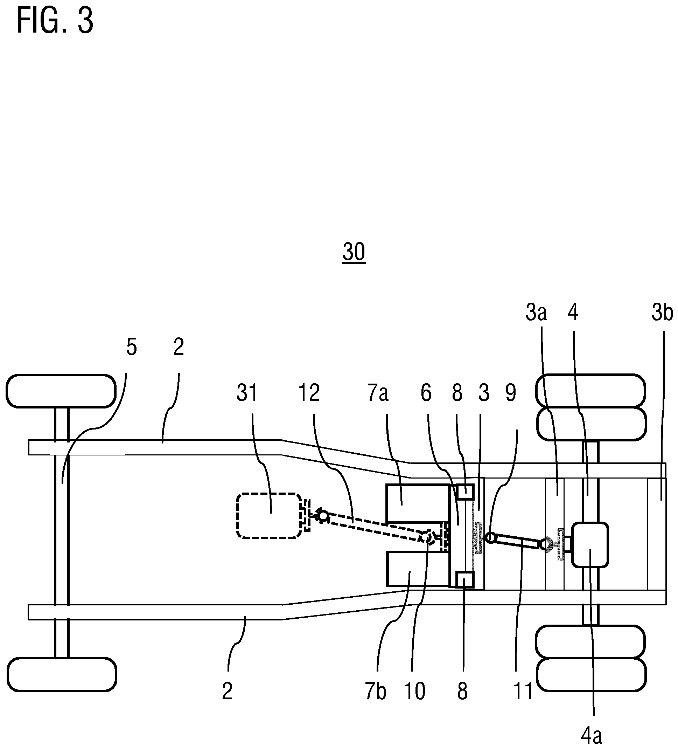

Figur 3 zeigt eine weitere Ausführungsvariante eines Batterie-elektrisch betriebenen Nutzfahrzeugs 30. Auch hier entsprechen Komponenten mit gleichen Bezugszeichen denen der Figur 1 und werden nicht gesondert beschrieben.

Die Besonderheit dieser Ausführungsvariante liegt unter anderem darin, dass an dem Wellenflansch 10, der auf der der Vorderachse 5 zugewandten Seite des Getriebes 6 angeordnet ist, nun eine Gelenkwelle 12 angeschlossen ist, die das Getriebe 6 antriebsmäßig mit einem Nebenaggregat 31 verbindet, so dass die elektrische Maschine auch zum Antrieb eines Nebenaggregats verwendet werden kann.

Auch hier sind wiederum zwei elektrische Maschinen 7a und 7b an dem Getriebe 6 angeschlossen. Im Unterschied zu der in Figur 1 gezeigten Ausführungsvariante liegt die Besonderheit hierfür ferner darin, dass das Getriebe 6 auf der der Vorderachse 5 zugewandten Seite des Querträgers 3a befestigt ist und somit auch die elektrischen Maschinen 7a und 7b auf dieser Seite des Querträgers angeordnet sind und sich in Richtung der Vorderachse 5 vom Getriebe 6 wegerstrecken. Je nach verfügbarem Bauraum kann hier eine zweckmäßige Anordnung des Getriebes und der elektrischen Maschinen 7a, 7b am Querträger 3 gewählt werden.

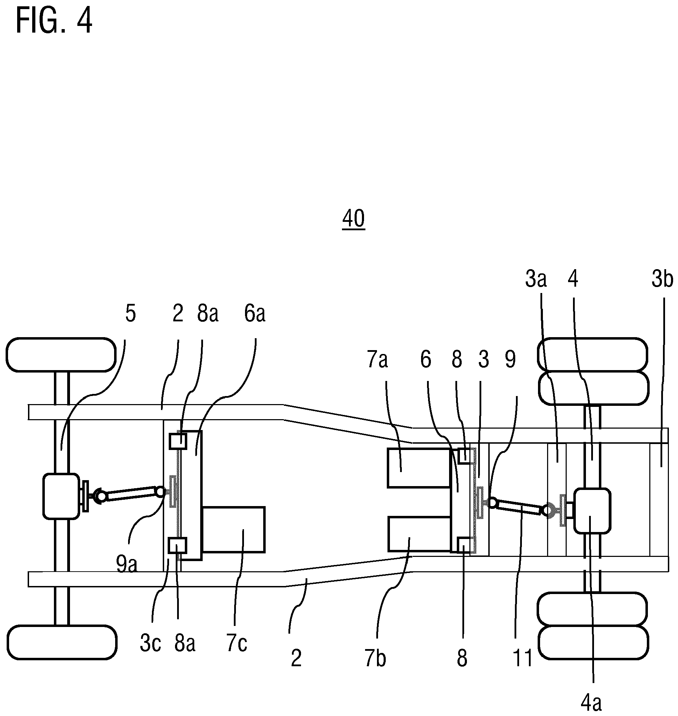

In Figur 4 ist eine weitere Ausführungsvariante eines Batterie-elektrisch betriebenen Nutzfahrzeugs 40 dargestellt. Die gezeigte Ausführungsform stellt einen elektrischen Allradantrieb dar, jedoch im Unterschied zur Figur 1 ohne Kardanverbindung zwischen Vorderachse 5 und Hinterachse 4. Stattdessen ist zum Antrieb der Vorderachse 5 eine zusätzliche Getriebe-E-Maschinen-Einheit 6a, 7c vorgesehen. Diese ist an einem Querträger 3c befestigt, der in der Nähe der Vorderachse 5 angeordnet ist. Hier ist wiederum ein Untersetzungsgetriebe 6a über ein Befestigungsmittel 8a an dem Querträger 3c befestigt, wobei eine elektrische Maschine 7c am Getriebe 6a angeordnet ist und über das Getriebe in Antriebsverbindung mit der Vorderachse 5 des Nutzfahrzeugs steht. Zum Antrieb der Hinterachse ist wiederum ein Getriebe 6 am Querträger 3 befestigt. Hierbei sind wiederum zwei elektrische Maschinen 7a und 7b an dem Getriebe 6 mit unterschiedlichen Übersetzungen angeschlossen. Auch hier kann das Getriebe 6 als Zweiganggetriebe ausgeführt sein.

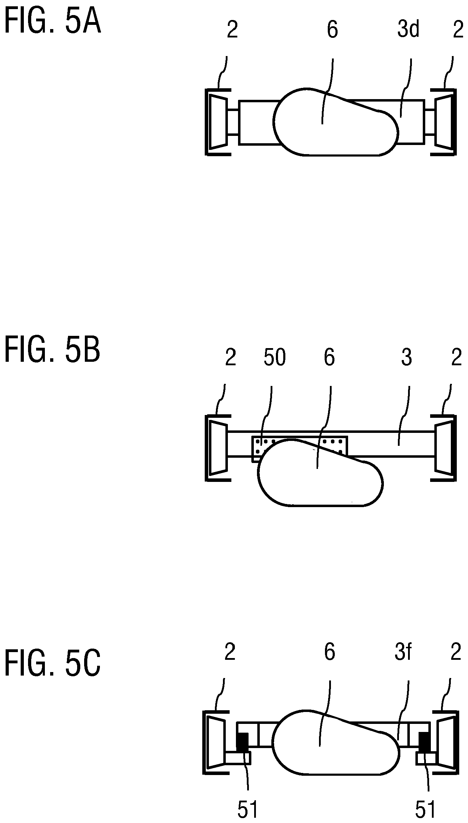

Figur 5A zeigt eine schematische Vorderansicht im Schnitt auf einen Leiterrahmen des Nutzfahrzeugs zur Illustration einer ersten Anbringungsvariante des Getriebes 6 am Querträger. Mit dem Bezugszeichen 2 sind wiederum die beiden Längsträger des Leiterrahmens bezeichnet. Gemäß der in Figur 2A gezeigten Ausführungsvariante bildet das Getriebe 6 selbst einen Querträger aus, indem am Getriebegehäuse ein Querträgerelement 3d befestigt ist, über den das Getriebe 6 zwischen den beiden Längsträgern 2 befestigt wird. Das Querträgerelement 3d kann somit einen herkömmlichen Querträger ersetzen. Auf diese Weise kann das Getriebe 6 selbst bei entsprechend zweckmäßiger Ausführung des Querträgerelements 3d eine Querversteifungsfunktion ausbilden.

Figur 5B zeigt eine schematische Vorderansicht im Schnitt auf einen Leiterrahmen des Nutzfahrzeugs zur Illustration einer zweiten Anbringungsvariante des Getriebes 6. Gemäß einer alternativen Ausführungsvariante, die in Figur 5B gezeigt ist, wird das Getriebe 6 direkt an einem herkömmlichen Querträger 3 des Leiterrahmens gezeigt. Der Querträger 3 ist hier stark schematisiert und vereinfacht gezeichnet. Das Getriebe 6 kann beispielsweise mittels einer Lochplatte 50 direkt am Querträger 3 verschraubt werden.

Figur 2C illustriert eine Ausführungsvariante, in der das Getriebe 6 am Leiterrahmen, insbesondere an den Längsträgern 2, gedämpft gelagert ist. Hierzu wird das Anpassgetriebe 6 an einem Querträgerelement 3f befestigt, das wiederum über Dämpfungselemente 51, z. B. Gummielemente, an den beiden Längsträgern 2 gelagert ist.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Nutzfahrzeug
- 2: Längsträger
- 3, 3a, 3b, 3c: Querträger
- 3d, 3f: Querträgerelement
- 4: Hinterachse
- 4a: Achsdifferenzial
- 5: Vorderachse
- 5a: Achsdifferenzial
- 6: Getriebe
- 6a: Getriebe
- 7a, 7b, 7c: Elektrische Maschine
- 8: Befestigungsmittel
- 8a: Befestigungsmittel
- 9: Wellenflansch
- 9a: Wellenflansch
- 10: Wellenflansch
- 11: Gelenkwelle
- 12: Gelenkwelle
- 20: Nutzfahrzeug
- 30: Nutzfahrzeug
- 31: Nebenaggregat
- 40: Nutzfahrzeug
- 50: Lochplatte
- 51: Dämpfungselement

## Patentansprüche

1. Batterie-elektrisch betriebenes Nutzfahrzeug (1), insbesondere Lastkraftwagen, umfassend
einen Leiterrahmen, aufweisend zwei Längsträger (2), die durch Querträger (3) miteinander verbunden sind;
ein Getriebe (6); und
mindestens eine am Getriebe (6) angeordnete generatorisch und motorisch betreibbare elektrische Maschine (7a, 7b), die über das Getriebe (6) antriebsmäßig mit mindestens einer Achse (4) des Nutzfahrzeugs verbindbar ist,
wobei das Getriebe (6) an einem Querträger (3) des Leiterrahmens befestigt ist, **dadurch gekennzeichnet,**
**dass** die elektrische Maschine (7a, 7b) über das Getriebe (6) am Querträger (3) gehaltert wird.

2. Nutzfahrzeug nach Anspruch 1, **dadurch gekennzeichnet, dass** das Getriebe (6) ein Zwei-Gang-Getriebe ist.

3. Nutzfahrzeug nach Anspruch 1 oder 2, **dadurch gekennzeichnet, dass** das Getriebe (6) ein Untersetzungsgetriebe zur Untersetzung der Drehzahl der mindestens einen elektrischen Maschine ist und dabei eine feste, eine variable oder mehrere feste Übersetzungen bereitstellt.

4. Nutzfahrzeug nach einem der vorhergehenden Ansprüche, **dadurch gekennzeichnet,**
a) **dass** der Querträger (3f), an dem das Getriebe (6) befestigt ist, gedämpft an den beiden Längsträgern (2) gelagert ist, oder
b) **dass** das Getriebe (6) gedämpft am Querträger (3) gelagert ist.

5. Nutzfahrzeug nach einem der vorhergehenden Ansprüche, **dadurch gekennzeichnet, dass** das Getriebe (6) zwei Getriebeschnittstellen zur Anbindung einer motorisch und generatorisch betreibbaren elektrischen Maschine aufweist, so dass wahlweise eine oder zwei elektrische Maschinen über das Getriebe antriebsmäßig mit der Achse verbindbar sind.

6. Nutzfahrzeug nach Anspruch 5, **dadurch gekennzeichnet,**
a) **dass** eine Getriebeübersetzung des Getriebes für die beiden Getriebeschnittstellen unterschiedlich ist; und/oder
b) **dass** zwei motorisch und generatorisch betreibbare elektrische Maschinen (7a, 7b) an dem Getriebe (6) angeordnet sind und mit jeweils unterschiedlicher Übersetzung mit der mindestens einen Achse (4) in Antriebsverbindung stehen.

7. Nutzfahrzeug nach einem der vorhergehenden Ansprüche, **dadurch gekennzeichnet, dass** das Getriebe
a) einen ersten Wellenflansch (9) aufweist, an dem eine erste Gelenkwelle (11) angebunden ist, die das Getriebe (6) antriebsmäßig mit einer Hinterachse (4) verbindet, und
b) einen zweiten Wellenflansch (10) aufweist, an dem eine zweite Gelenkwelle (2) angebunden ist, die das Getriebe (6) antriebsmäßig mit einer Vorderachse (5) oder einem Nebenaggregat (31) verbindet.

8. Nutzfahrzeug nach einem der vorhergehenden Ansprüche, **dadurch gekennzeichnet, dass** das Getriebe (6) ein Stirnradgetriebe, ein Planetengetriebe oder ein Umschlingungsgetriebe ist.

9. Nutzfahrzeug nach einem der vorhergehenden Ansprüche, **dadurch gekennzeichnet,**
a) **dass** die elektrische Maschine eine Dauerleistung von mindestens 100 kW, 120 kW, 150 kW oder mindestens 200 kW aufweist, und/oder
b) **dass** die elektrische Maschine eine Spitzenleistung von mindestens 250 kW, 300 kW oder 320 kW aufweist, und/oder
c) **dass** die elektrische Maschine eine Nenndrehzahl von mindestens 5.000 min⁻¹, 7.500 min⁻¹, 10.000 min⁻¹, 12.500 min⁻¹ oder 15.000 min⁻¹ aufweist; und/oder
d) **dass** die elektrische Maschine für die Nutzung einer Spannungsklasse von 400 V oder von 800 V, insbesondere einer Zwischenkreisspannungsklasse bis 800 V, ausgelegt ist.

10. Nutzfahrzeug nach einem der vorhergehenden Ansprüche, **dadurch gekennzeichnet,**
a) **dass** das Getriebe (6) an einem ersten Querträger (3) des Leiterrahmens befestigt ist und die mindestens eine elektrische Maschine über das Getriebe antriebsmäßig mit der Hinterachse (4) verbindbar ist; und
b) **dass** zur Ausbildung eines elektrischen Allradantriebs eine weitere generatorisch und motorisch betreibbare elektrische Maschine (7c) an einem zweiten Getriebe (6a) angeordnet ist und über das zweite Getriebe (6a) antriebsmäßig mit einer Vorderachse (5) verbindbar ist, wobei das zweite Getriebe (6a) an einem zweiten Querträger (3c) befestigt ist.

## Claims

1. A battery-electric operated commercial vehicle (1), in particular a lorry, comprising
a ladder frame, having two longitudinal carriers (2) which are connected to one another by way of crossmembers (3) ;
a transmission (6); and
at least one electric machine (7a, 7b) which is arranged on the transmission (6), can be operated as a generator and as a motor, and can be drive-connected via the transmission (6) to at least one axle (4) of the commercial vehicle,
the transmission (6) being fastened to a crossmember (3) of the ladder frame, **characterized**
**in that** the electric machine (7a, 7b) is secured on the crossmember (3) via the transmission (6).

2. The commercial vehicle according to Claim 1, **characterized in that** the transmission (6) is a two-gear transmission.

3. The commercial vehicle according to Claim 1 or 2, **characterized in that** the transmission (6) is a step-down transmission for stepping down the rotational speed of the at least one electric machine, and provides a fixed transmission ratio, a variable transmission ratio or a plurality of fixed transmission ratios here.

4. The commercial vehicle according to one of the preceding claims, **characterized**
a) **in that** the crossmember (3f), to which the transmission (6) is fastened, is mounted in a damped manner on the two longitudinal carriers (2), or
b) **in that** the transmission (6) is mounted in a damped manner on the crossmember (3).

5. The commercial vehicle according to one of the preceding claims, **characterized in that** the transmission (6) has two transmission interfaces for attaching an electric machine which can be operated as a motor and as a generator, with the result that one or two electric machines can be drive-connected selectively to the axle via the transmission.

6. The commercial vehicle according to Claim 5, **characterized**
a) **in that** a transmission ratio of the transmission is different for the two transmission interfaces; and/or
b) **in that** two electric machines (7a, 7b) which can be operated as a motor and as a generator are arranged on the transmission (6) and are drive-connected to the at least one axle (4) in each case with a different transmission ratio.

7. The commercial vehicle according to one of the preceding claims, **characterized in that** the transmission
a) has a first shaft flange (9), to which a first articulated shaft (11) is attached, which drive-connects the transmission (6) to the rear axle (4), and
b) has a second shaft flange (10), to which a second articulated shaft (2) is attached which drive-connects the transmission (6) to a front axle (5) or an ancillary unit (31).

8. The commercial vehicle according to one of the preceding claims, **characterized in that** the transmission (6) is a spur gear transmission, a planetary transmission or a wrap-around transmission.

9. The commercial vehicle according to one of the preceding claims, **characterized**
a) **in that** the electric machine has a continuous output of at least 100 kW, 120 kW, 150 kW or at least 200 kW, and/or
b) **in that** the electric machine has a peak output of at least 250 kW, 300 kW or 320 kW, and/or
c) **in that** the electric machine has a rated speed of at least 5000 rpm, 7500 rpm, 10 000 rpm, 12 500 rpm or 15 000 rpm; and/or
d) **in that** the electric machine is designed for the utilization of a voltage class of 400 V or of 800 V, in particular of a DC link voltage class up to 800 V.

10. The commercial vehicle according to one of the preceding claims, **characterized**
a) **in that** the transmission (6) is fastened to a first crossmember (3) of the ladder frame, and the at least one electric machine can be drive-connected to the rear axle (4) via the transmission; and
b) in order to configure an electric all wheel drive, a further electric machine (7c) which can be operated as a generator and as a motor is arranged on a second transmission (6a) and can be drive-connected via the second transmission (6a) to a front axle (5), the second transmission (6a) being fastened to a second crossmember (3c) .

## Revendications

1. Véhicule utilitaire (1) à batterie électrique, en particulier poids lourd, comportant
un châssis en forme d'échelle, comprenant deux longerons (2) qui sont reliés l'un à l'autre au moyen de traverses (3) ;
une boîte de vitesses (6) ; et
au moins une machine électrique (7a, 7b) disposée au niveau de la boîte de vitesses (6) et pouvant fonctionner en tant que générateur et en tant que moteur, laquelle machine électrique peut être reliée par entraînement à au moins un essieu (4) du véhicule utilitaire par le biais de la boîte de vitesses (6),
dans lequel la boîte de vitesses (6) est fixée à une traverse (3) du châssis en forme d'échelle, **caractérisé en ce que**
la machine électrique (7a, 7b) est supportée sur la traverse (3) par le biais de la boîte de vitesses (6).

2. Véhicule utilitaire selon la revendication 1, **caractérisé en ce que** la boîte de vitesses (6) est une boîte de vitesses à deux rapports.

3. Véhicule utilitaire selon la revendication 1 ou 2, **caractérisé en ce que** la boîte de vitesses (6) est un réducteur servant à la réduction du régime de l'au moins une machine électrique et produit à cet effet une réduction fixe, une réduction variable ou plusieurs réductions fixes.

4. Véhicule utilitaire selon l'une des revendications précédentes, **caractérisé en ce que**
a) la traverse (3f) à laquelle la boîte de vitesses (6) est fixée est montée de manière amortie sur les deux longerons (2) ou
b) la boîte de vitesses (6) est montée de manière amortie sur la traverse (3).

5. Véhicule utilitaire selon l'une des revendications précédentes, **caractérisé en ce que** la boîte de vitesses (6) comprend deux interfaces de boîte de vitesses pour la connexion d'une machine électrique pouvant fonctionner en tant que moteur et en tant que générateur, de telle sorte qu'une ou deux machines électriques puissent être reliées sélectivement par entraînement à l'essieu par le biais de la boîte de vitesses.

6. Véhicule utilitaire selon la revendication 5, **caractérisé en ce que**
a) un rapport de multiplication de la boîte de vitesses est différent pour les deux interfaces de boîte de vitesses ; et/ou
b) deux machines électriques (7a, 7b) pouvant fonctionner en tant que moteur et en tant que générateur sont disposées au niveau de la boîte de vitesses (6) et sont en liaison d'entraînement avec l'au moins un essieu (4) suivant respectivement une multiplication différente.

7. Véhicule utilitaire selon l'une des revendications précédentes, **caractérisé en ce que** la boîte de vitesses
a) comprend une première bride d'arbre (9) à laquelle est connecté un premier arbre de transmission (11) qui relie la boîte de vitesses (6) à un essieu arrière (4) par entraînement et
b) comprend une deuxième bride d'arbre (10) à laquelle est connecté un deuxième arbre de transmission (2) qui relie la boîte de vitesses (6) à un essieu avant (5) ou à un organe auxiliaire (31) par entraînement.

8. Véhicule utilitaire selon l'une des revendications précédentes, **caractérisé en ce que** la boîte de vitesses (6) est une boîte de vitesses à pignons droits, une boîte de vitesses à engrenages planétaires ou une boîte de vitesses à variation continue.

9. Véhicule utilitaire selon l'une des revendications précédentes, **caractérisé en ce que**
a) la machine électrique présente une puissance continue d'au moins 100 kW, 120 kW, 150 kW ou d'au moins 200 kW et/ou
b) la machine électrique présente une puissance de pointe d'au moins 250 kW, 300 kW ou 320 kW et/ou
c) la machine électrique présente un régime nominal d'au moins 5000 min⁻¹, 7500 min⁻¹, 10 000 min⁻¹, 12 500 min⁻¹ ou 15 000 min⁻¹; et/ou
d) la machine électrique est conçue pour l'utilisation d'une classe de tension de 400 V ou de 800 V, en particulier d'une classe de tension de circuit intermédiaire de jusqu'à 800 V.

10. Véhicule utilitaire selon l'une des revendications précédentes, **caractérisé en ce que**
a) la boîte de vitesses (6) est fixée à une traverse (3) du châssis en forme d'échelle et l'au moins une machine électrique peut être reliée par entraînement à l'essieu arrière (4) par le biais de la boîte de vitesses ; et
b) pour réaliser une transmission intégrale électrique, une autre machine électrique (7c) pouvant fonctionner en tant que générateur et en tant que moteur est disposée au niveau d'une deuxième boîte de vitesses (6a) et peut être reliée par entraînement à un essieu avant (5) par le biais de la deuxième boîte de vitesses (6a), la deuxième boîte de vitesses (6a) étant fixée à une deuxième traverse (3c).
